(19) Europäisches Patentamt

European Patent Office

Office européen des brevets

(11) Publication number: **0 376 211 B1**

# EUROPEAN PATENT SPECIFICATION

(45) Date of publication of patent specification: **08.06.94**  (51) Int. Cl.⁵: **B29C 51/00**, B29C 51/42

(21) Application number: **89123815.6**

(22) Date of filing: **22.12.89**

(54) **Method of forming an articale out of a themoplastic resin sheet.**

(30) Priority: **27.12.88 JP 335321/88**
**09.01.89 JP 3280/89**

(43) Date of publication of application:
**04.07.90 Bulletin 90/27**

(45) Publication of the grant of the patent:
**08.06.94 Bulletin 94/23**

(84) Designated Contracting States:
**BE CH DE FR GB IT LI NL SE**

(56) References cited:
**EP-A- 0 186 729**
**DE-A- 2 830 788**
**DE-A- 2 912 680**
**US-A- 3 396 062**

(73) Proprietor: **IDEMITSU PETROCHEMICAL CO. LTD.**
**1-1, Marunouchi 3-chome**
**Chiyoda-ku**
**Tokyo 100(JP)**

(72) Inventor: **Takama, Hideyuki Idemitsu Petro-chemical Co.-Ltd.**
**841-3, Kou**
**Shirahama-cho**
**Himeji-shi Hyogo-ken(JP)**

(74) Representative: **Patentanwälte Grünecker, Kinkeldey, Stockmair & Partner**
**Maximilianstrasse 58**
**D-80538 München (DE)**

**Description**

The present invention relates to a method of forming an article out of a thermoplastic resin sheet and can be used in the field of food packaging or the like.

DE-A-28 30 788 discloses a method of manufacturing thin-walled articles by the thermal forming of a crystalline thermoplastic sheet or web material in which

(1) the core material of the web or sheet is heated to a temperature close to or lower than the critical crystalline melting temperature range of the crystalline thermoplastic material, while the outer surface regions of the web or sheet are at a lower temperature than the core material, and

(2) the outer surface regions of the web or sheet are heated to a temperature in which the outer surface regions become at least elastically deformable, whereas the core material is retained in an elastically deformable state at a temperature close to but lower than the critical crystalline melting temperature range.

Furthermore, US-PS-3,396,062 discloses a method of thermoforming foam plastic insulated articles where at least one layer of a cellular roamed thermoplastic material is heated by contact heating and the heat of said contact heating is used in the thermoforming molding step. Preferably, at least one sheet of foam plastic is used in combination with a solid thermoplastic line and contact heating is used to derive the heat necessary for molding.

Furthermore, from EP-A-0 186 729, an apparatus comprising a forming station is known in which a thermoplastic sheet is heated and formed into an open bag. A method for forming the sheet into an open bag is also described.

The heat-resisting temperature limit of a container for foods or the like formed, for example, out of a Polypropylene (PP) sheet or a layered sheet mainly including polypropylene by using regular Solid-phase Pressure Forming (SPPF) is its boil (95°C) and the heat treatment of such container above the boil is impossible because the container would be deformed.

Conventionally, there were various proposed methods of manufacturing such plastic articles improved in heat resistance with maintaining in transparency. For example, according to Japanese Patent Publication No.58-37886, a method of manufacturing a thin plastic article is proposed which comprises the steps of forcing with a heated plug a crystal plastic sheet, in which each surface thereof is preheated to a temperature below its melting point, into a cavity to preform a half-finished container-like article, introducing heated compressed air into the thus-preheated article for inflation, and introducing non-heated compressed air into the inflated article to cooling the same.

According to the Japanese Patent Publication No.58-37886, although both surfaces of the plastic sheet are heated to the same temperature, the plug contacts the plastic sheet during preforming the article. Therefore, if the forming temperature is set in the vicinity of the melting point of the sheet, there arise problems that the transparency of the plastic sheet will be deteriorated and that the buckling strength of the resulting article will be insufficient. If the forming temperature is set to a value at least 10°C lower than the melting point of the sheet in order to bring about transparency and transfer of the plug shape which would impair the transparency of the sheet is prevented, there will arise the problem that the heat resistance of the final article will become lower, so that the article can neither be retorted, for example, at 120°C nor filled up at high temperature either. The metal plug incorporating a heater therein is expensive and the plastic articles manufactured by using the plug would thus be expensive.

It is an object of the present invention to provide a method of forming an article out of a thermoplastic resin sheet which has improved heat resistance and buckling strength while maintaining transparency.

In order to achieve the above object, the present invention provides a method of forming an article out of a thermoplastic resin sheet in which a heated softened thermoplastic sheet is preformed into a half-finished product and then thermally formed into the article using a mold assembly including a die having at least one cavity and a plug, comprising the steps of heating a first surface of the sheet facing the plug to a temperature less than or equal to 10°C lower than the melting point of the sheet; heating a second surface of the sheet facing the die cavity to a temperature between the melting point of the sheet minus 5°C and the melting point of the sheet plus 5°C and thermal forming the heated sheet.

In order to achieve the afore-mentioned object, the present invention provides another method in which a heated softened thermoplastic resin sheet is thermally formed into a half-finished product by using a mold assembly including

a die having at least one cavity without using a plug, comprising the steps of heating the sheet to a temperature between the melting point of the sheet minus 5°C and the melting point of the sheet plus 5°C and thermal forming the sheet.

2

Preferably, the heating temperature of the first sheet surface is lower than the melting point of the sheet minus 10°C and the lower limit is the melting point minus 30°C if the plug is used. If the heating temperature is set lower than the melting point minus 30 °C, the reproducibility of the mold would be deteriorated. Conversely, if the heating temperature is higher than the melting point minus 10°C, the shape of the plug would be transferred to the sheet to thereby deteriorate the optical characteristics of the sheet.

A case will be considered in which no plug is used and the heating temperature of the sheet is set to a temperature between the melting point of the sheet minus 5°C and the melting point of the sheet plus 5°C. If the heating temperature of the first sheet is lower than the melting point of the sheet minus 5°C, the heat resistance will be deteriorated whereas if the heating temperature is higher than the melting point plus 5°C, the transparency of the sheet would be lost.

The sheet is fed intermittently (or continuously) into the heating zone where the sheet is heated indirectly (radiantly) from its upper and lower sides such that each sheet surface will be at the desired temperature. To this end, an electric heater, a hot blower heater or heating means of any other types may be used, but a ceramic heater is preferable in view of uniform heating. Incidentally, it is economically preferable to preheat directly by a roll or a flat plate, and thereafter heat indirectly by the ceramic heater.

When a heated softed thermoplastic resin sheet is preformed by the plug, the sheet may be held between a pressure air box and the die, and the plug may then contact with the sheet to preform. Alternatively, the plug may firstly contact with the sheet, which may then be held between the box and the die for preforming the sheet.

The plug used in the preforming is a thermal insulating plug which may be made of a thermal insulating material such as a foamed glass material, a sintered ceramic material, wood, felt-wound wood or the like.

The forming method used after the preforming may be any one of vacuum forming, pressure air forming, or compressed air/vacuum forming means and the like. In the case of pressure air forming method, the temperature of the compressed air is preferably set so as to prevent a decrease in the temperature of the sheet surface. This is because the characteristic of the resulting articles is influenced by a change in the ambient conditions through forming process, especially in the heating temperature. Therefore, the sheet temperature should be maintained at at least the afore-mentioned range of temperature.

Preferably, the compressed air box constituting a die is preferably adjusted to a desired temperature. Because if the compressed air box is at ordinary temperature, the heated air would be cooled down, so that the characteristic of the resulting articles would be inadversely affected. Therefore, the temperature of the compressed air box should be set to a temperature which will prevent to lower the temperature of the heated compressed air. Preferably, it should be substantially the same as that of the heated compressed air.

This heated compressed air should preferably be dehumidified by a dehumidifier. If the humidity of the air is high, a mist would be appeared during compressed air forming to thereby deteriorate the appearance of the resulting articles.

Preferably, the drawing ratio of the die is less than 0.43 when no plug is used. Otherwise, the buckling strength of the resulting container would be deteriorated. While a plug is used, there is no limit to the drawing ratio.

The number of cavities in the die may be one or more in the present invention.

In the method of forming an article out of a thermoplastic resin sheet according to the present invention, the thermoplastic resin sheet is a polypropylene sheet or a layered thermoplastic resin sheet (hereinafter referred to as "polypropylene sheet") which is mainly made of polypropylene and includes the outermost layers of polypropylene (each outer layer contacting with the plug and the die).

The melting point of regular homopolypropylene is 164 - 170°C.

If the heating temperature of the polypropylene sheet is higher than its melting point plus 5°C, the optical characteristics of the haze and luster would be deteriorated.

Some examples of the layered thermoplastic resin sheet which are mainly made of polypropylene and has a outermost layer(on the side of the die) consisting of polypropylene will hereunder be listed;

i. PP layer/ AD (adhesive) layer/ EVOH (ethylenevenylalcohol copolymer) layer/ AD layer/ PP layer,

ii. PP layer/ AD layer/ PE (polyethylene) layer/ AD layer/ PP layer,

iii. PP layer/ AD layer/ PVDC (polyvinylidene chloride) layer/ AD layer/ PP layer,

iv. PE (polyethylene)layer/ PP layer/ AD layer/ EVOH layer/ AD layer/ PP layer,

v. IE layer/ PP layer,

vi. PET (polyethylene terephtalate) layer/ PP layer/ AD layer/ EVOH layer/ AD layer/ PP layer,

vii. PET layer/ PP layer,

viii. PC (polycarbonate) layer/ AD layer/ PP layer/ AD layer/ EVOH layer/ AD layer/ PP layer, and

ix. PC layer/ AD layer/ PP layer.

In order to form these layered sheets, such methods as dry-laminating method, wet-laminating method, simultaneous extrusion method or other regular laminating method may be applicable.

According to the present invention, the heating temperature of the sheet is set within a predetermined temperature range. Thus, the resulting articles are excellent in optical characteristic and heat resistance.

**BRIEF DESCRIPTION OF THE DRAWINGS**

Fig. 1: schematically illustrates a first embodiment of the present invention; and
Fig. 2: schematically illustrates a second embodiment of the present invention.

**DETAILED DESCRIPTION OF THE PREFERRED EMBODIMENTS**

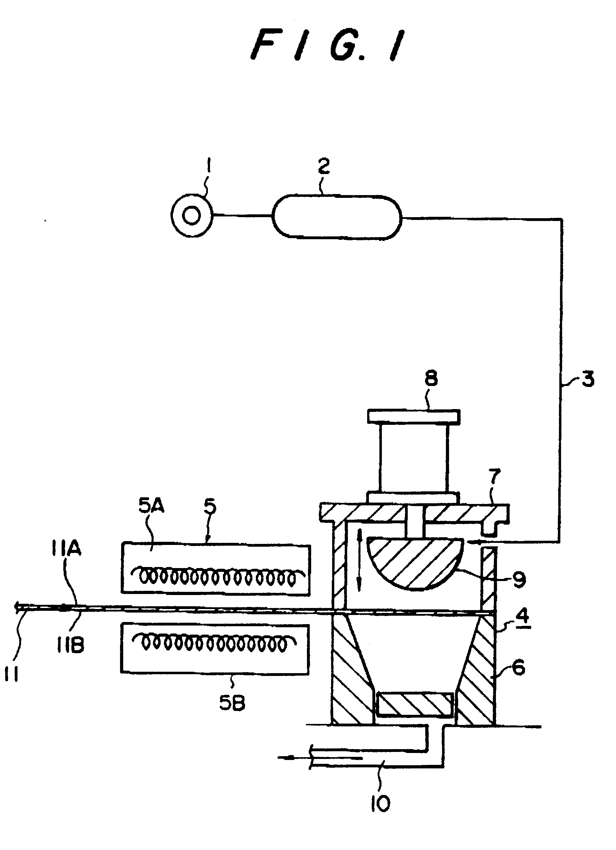

Referring to a forming device shown in Fig. 1, a method of forming an article out of a thermoplastic resin sheet as a first embodiment of the present invention will hereunder be described.

This forming device includes a source of air supply 1 which includes a compressor instituting compressed air/vacuum means for forming a thermally thermoplastic resin sheet, a receiver tank 2 connected to the source of air supply 1 in due course and a mold assembly 4 into which compressed air is fed from the receiver tank 2 via a pipe 3, and further comprising a ceramic heater 5 which constitutes heating means having upper and lower heating sections 5A and 5B , which is provided before the mold assembly 4.

The heating sections 5A and 5B of the ceramic heater 5 are separately controllable with reference to temperature by temperature control means.

The mold assembly 4 includes a die 6 and a compressed air box 7 and a thermal insulating plug 9 as another thermal insulating means which is disposed within the box 7 so as to move vertically under the control of an air cylinder 8 disposed above the box 7. The plug 9 is made, for example, of syntatic form (a glass or a mixture of a microballoon such as phenol resin and a thermosetting resin).

The specific size of the die 6 is 90 mm in diameter, 45 mm in depth, and 0.5 in drawing ratio. As shown, the die 6 can be provided therewith an evacuating tube 10 communicated with a vacuum pump (not shown), so that the die is arranged to be a compressed air/vacuum die 4.

Experimental Example 1

A plastic article (container) was produced as follows, using the above forming device.

A polypropylene sheet 11 (Purelay (trade name), manufactured by Idemitsu Petrochemical Company Limited) having a thickness of 0.85 mm and a melting point of 165 C was fed through between the heating sections 5A and 5B of the ceramic heater 5 to heat up to 149°C the heating section 5A side sheet surface (hereinafter referred to as the upper surface) 11A and to 162°C the heating section 5B side sheet surface (hereinafter referred to as the lower surface) 11B. The temperatures of the upper and lower surfaces 11A and 11B were measured by using thermocouples attached to the corresponding upper and lower surfaces. When this polypropylene sheet 11 was used, the desirable heating temperature range of the upper surface 11A is equal to, or below, 155°C while the desirable heating temperature range of the lower surface 11B is 160 - 170°C.

The sheet 11 whose upper and lower surfaces 11A and 11B were heated to 149 and 162°C, respectively, was fed continuously to the mold 4, and the thus-fed sheet 11 was held between the die 6 and compressed air box 7.

Compressed air (at a pressure of 4 kg/cm ) was nextly introduced from the receiver tank 2 to the mold assembly 4 to form a plastic container in the particular experimental example out of the sheet with optionally vacuuming the sheet via the evacuating tube 10 as to closely contact with the die 6 surface.

Experimental Example 2

A plastic container of an experimental example 2 was obtained by using the above forming device in a process similar to that used in the example 1 and under conditions similar to those under which the example 1 was prepared.

The heating temperatures of the upper and lower surfaces 11A and 11B of the polypropylene sheet 11 were set to 154 and 168°C, respectively.

Comparative Examples 1 - 6

A polypropylene sheet (Purelay (trade name) manufactured by Idemitsu Petrochemical Company Limited) having a thickness of 0.85 mm and a melting point of 165 C was used to obtain plastic containers according to the corresponding comparison examples using processed similar to those used in the experimental examples.

The heating temperatures of the upper and lower surfaces 11A and 11B of the polypropylene sheet 11 were set as follows.

In the comparative example 1, the upper and lower surfaces 11A and 11B were set to 143 and 154°C, respectively.

In the comparative example 2, the upper and lower surfaces 11A and 11B were set to 152 and 153°C, respectively.

In the comparative example 3, the upper and lower surfaces 11A and 11B are set to 161 and 172°C, respectively.

In the comparative example 4, the upper and lower surfaces 11A and 11B were both set to 172°C.

In the comparative example 5, the upper and lower surfaces 11A and 11B were set to 161 and 162°C, respectively.

In the comparative example 6, the upper and lower surfaces 11A and 11B were set to 163 and 150°C, respectively.

Table 1 below shows the results of measuring the presence/absence of transfer of the plug shape to the sheet, heat-resisting temperatures (at which no deformations due to retorting process) and optical characteristics (luster and haze) of the respective resulting plastic containers of the experimental examples 1 and 2 and the comparative examples 1 - 6. The lusters are each represented by the value measured at the center of a respective side of container.

## Table 1

| | No. | UPPER SURFACE TEMPERATURE (°C) | LOWER SURFACE TEMPERATURE (°C) | TRANSFER OF PLUG SHAPE | THERMAL RESISTING TEMPERATURE (°C) | OPTICAL CHARACTERISTICS | |
| | | | | | | LUSTER (%) | HAZE (%) |
|---|---|---|---|---|---|---|---|
| A | 1 | 149 | 162 | ABSENT | 130 | 94 | 10 |
| | 2 | 154 | 168 | ABSENT | 130 | 93 | 12 |
| B | 1 | 143 | 154 | ABSENT | 100 | 94 | 8 |
| | 2 | 152 | 153 | ABSENT | 105 | 94 | 10 |
| | 3 | 161 | 172 | PRESENT | 125 | 51 | 43 |
| | 4 | 172 | 172 | PRESENT | 125 | 46 | 50 |
| | 5 | 161 | 162 | PRESENT | 130 | 57 | 39 |
| | 6 | 163 | 150 | PRESENT | 115 | 87 | 41 |

Notes: A···EXPERIMENTAL EXAMPLES
B···COMPARATIVE EXAMPLES

It will be understood from Table 1 that according to experimental examples 1 and 2, no transfer of the plug shape occurred, that heat-resistance up to 130°C was ensured, and that excellent optical characteristic concerning luster and haze were obtained by setting the heating temperature of the upper surface 11A of the polypropylene sheet 11 to a temperature below a predetermined temperature (of 155°C) and the heating temperature of the lower surface 11B to a temperature in a predetermined range of 160 - 170°C.

Therefore, the plastic containers obtained in the experimental examples maintain their transparency even after the forming. Improvement to the heat resistance serves to prevent deformation of the containers even if high temperature retorting process or high temperature charging is performed.

While in the comparative examples 1 and 2 the upper surface 11A was set at a temperature below a predetermined temperature (155°C) as in the experimental example, the lower surface 11B was set at a temperature lower than the lower limit of the predetermined temperature range of 160 - 170°C in the experimental examples, so that the heat resistance limit was decreased.

In the comparative examples 3 and 4, the upper surface 11A was set at a temperature higher than the predetermined heating temperature of the experimental examples while the lower surface 11B was set at a temperature higher than the upper limit of the predetermined heating temperature range in the experimental examples, so that transfer of the plug shape occurred and the optical characteristics concerning luster and haze were not so good.

In the comparative example 5, while the lower surface 11B was set at a temperature in the predetermined heating temperature range of the experimental examples, the upper surface 11A was set at a temperature higher than the predetermined heating temperature of the experimental examples, so that transfer of the plug shape occurred and the optical characteristics concerning luster and haze were bad.

In the comparative example 6, the upper surface 11A was set at a temperature higher than the upper limit of the predetermined temperature range of the experimental examples while the lower surface 11B was set at a temperature lower than the lower limit of the predetermined temperature range of the experimental examples. Therefore, transfer of the plug shape occurred and the optical characteristics of haze was bad.

Therefore, according to the first embodiment, transparency was maintained while heat resistance was improved. Specifically, since the plastic products obtained by the present invention have excellent heat resistance, they were not deformed by high temperature retorting process or high temperature filling.

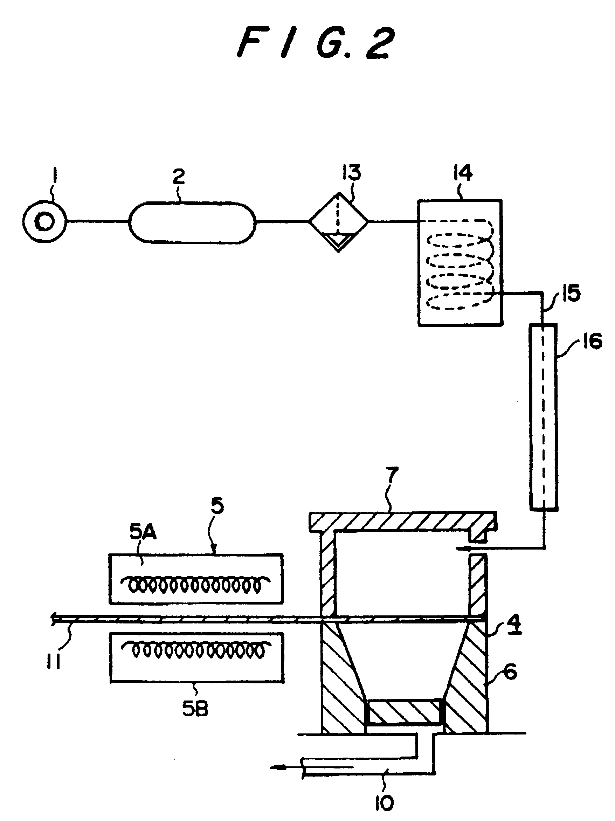

A second embodiment of the present invention will now be described with reference to Fig. 2. The same reference numeral is used to denote the same element of the first and second embodiments and their further description will be omitted or simplified.

The second embodiment is the same as the first embodiment except that the former uses no plug as the heating means and includes a dehumidifier which eliminates mist, a heating tank, temperature adjusting means such as heater provided in a pipe provided between the receiver tank and the mold.

The forming device includes a source of air supply 1 comprising a compressor, etc., a receive tank 2, a dehumidifier 13, and a heating tank 14 connected in this order in fluid communication. It further includes a mold assembly 4 to which heated compressed air is supplied form the heating tank 14 via a piping 15. It further includes a ceramic heater 5 comprising upper and lower heating sections 5A and 5B provided upstream of the mold assembly 4.

The mold assembly 4 includes a die 6 and a compressed air box 7. The temperature of the box 7 is adjusted to substantially the same temperature as the heated compressed air. The die 6 has an evacuating piping 10 provided below the die 6 which piping is in fluid communication with a vacuum pump (not shown) to constitute a compressed air/vacuum mold 4.

The pipe 15 preferably includes temperature adjusting means 16 such as a heater to prevent a decrease in the temperature of the air supplied therethrough to the mold assembly 4.

Experimental Example 3

The above plastic sheet forming device was used to manufacture the following plastic articles (containers).

A polypropylene sheet 11 having a thickness of 0.85 mm and a melting point of 165°C (Purelay (trade name) manufactured by Idemitsu Petrochemical Company limited) was used and passed through between the heating sections 5A and 5B of the ceramic heater 5 to heat both the surfaces of the heat to 163°C.

The sheet thus heated 11 was continuously fed into the mold assembly 4 where the sheet was held between the die 6 and compressed air box 7. When the polypropylene sheet 11 was used, the predetermined forming temperature range in the present invention was 160 - 170°C.

Compressed air (at a pressure of 4 kg/cm )at ordinary temperature was introduced from the heating tank 14 to the mold assembly 4. When require, the evacuating pipe 10 was evacuated to cause the sheet 11 to expand so as to closely contact the die 6 to thereby obtain a plastic container of the particular experimental example.

Experimental Examples 4 - 9

Plastic containers according to experimental examples 4 - 9 were obtained in processes similar to that used in the experimental example 3, using the plastic sheet forming device.

EP 0 376 211 B1

The forming temperature, pressure, compressed air temperature and drawing ratio varied from one experimental example to another.

For the forming temperature, it was set to 167°C in the experimental example 4 while it was set to 163°C in other experimental examples.

For the forming pressure, it was set to 4 kg/cm in the experimental examples 4, 5, 7 and 9 while it was set to 1.5 kg/cm in the experimental examples 6 and 8.

For the compressed air temperature, it was set to ordinary temperature in the experimental examples 4 and 6 - 8 while it was set to 170°C in the experimental examples 5 and 9.

For the drawing ratio, it was set to 0.35 in the experimental examples 4 - 6 while it was set to 0.45 in the experimental examples 7 - 9. When the drawing ratio is 0.35, the actual diameter and depth of the die were 91.5mm and 32 mm, respectively. When the drawing ratio was 0.45, the actual diameter and depth of the die were 91.5mm and 41.2 mm, respectively.

Comparative Examples 7 - 14

A polypropylene sheet (Purelay (trade name) Idemitsu Petrochemical Company Limited) having a thickness of 0.85 mm and a melting point of 165°C was used to obtain plastic containers according to the respective comparative examples in processes similar to those used in the experimental examples.

The forming temperature, pressure, compressed air temperature, presence/absence of the plug and the drawing ratio varied one comparative example to another as follows.

For the forming temperature, it was set to 149°C in the comparative examples 7 and 10; 156°C in the comparative examples 8 and 14; 175°C in the comparative examples 9 and 13; 154°C in the comparative examples 11; and 163°C in the comparative example 12.

For the forming pressure, it was set to 4 kg/cm in all the comparative examples 7 - 14.

For the compressed air temperature, it was set to ordinary temperature in all the comparative examples 7 - 14.

For the presence/absence of the plug, it was not used in the comparative examples 7 - 9 and 14; and it was used in the comparative examples 10 -13. The plug used were made of aluminum and adjusted to a temperature of 130 - 145°C.

For the drawing ratio, it was set to 0.35 in the comparative examples 7 - 13; and 0.45 in the comparative example 14.

Table 2 below shows the result of measuring the optical characteristics (haze and luster), thermal resistances (due to retorting process)and buckling strengths of the respective plastic containers according to the experimental examples 3 - 9 and the comparative examples 7 - 14. The values shown as the lusters were obtained by measuring those at the central portions of the container sides.

7

Table 2

| | No. | FORMING TEMPERATURE (°C) | FORMING PRESSURE (kg/cm²) | COMPRESSED AIR TEMPERATURE (°C) | PRESENCE OR ABSENSE OF PLUG | DRAWING RATIO | OPTICAL CHARACTERISTICS | | THERMAL RESISTING TEMPERATURE (°C) | BUCKLING STRENGTH (Kg) |
|---|---|---|---|---|---|---|---|---|---|---|
| | | | | | | | HAZE (%) | LUSTER (%) | | |
| A | 3 | 163 | 4 | ORDINARY | ABSENT | 0.35 | 14 | 92 | 125 | 4.5 |
| | 4 | 167 | 4 | ORDINARY | ABSENT | 0.35 | 15 | 93 | 125 | 4.6 |
| | 5 | 163 | 4 | 170 | ABSENT | 0.35 | 14 | 93 | 140 | 4.5 |
| | 6 | 163 | 1.5 | ORDINARY | ABSENT | 0.35 | 13 | 94 | 130 | 4.3 |
| | 7 | 163 | 4 | ORDINARY | ABSENT | 0.45 | 10 | 90 | 110 | 1.8 |
| | 8 | 163 | 1.5 | ORDINARY | ABSENT | 0.45 | 12 | 88 | 125 | 1.7 |
| | 9 | 163 | 4 | 170 | ABSENT | 0.45 | 11 | 90 | 125 | 1.8 |
| B | 7 | 149 | 4 | ORDINARY | ABSENT | 0.35 | 14 | 85 | 105 | 2.5 |
| | 8 | 156 | 4 | ORDINARY | ABSENT | 0.35 | 16 | 69 | 115 | 2.4 |
| | 9 | 175 | 4 | ORDINARY | ABSENT | 0.35 | 49 | 55 | 120 | 2.1 |
| | 10 | 149 | 4 | ORDINARY | PRESENT | 0.35 | 12 | 94 | 100 | 3.2 |
| | 11 | 154 | 4 | ORDINARY | PRESENT | 0.35 | 15 | 88 | 105 | 2.7 |
| | 12 | 163 | 4 | ORDINARY | PRESENT | 0.35 | 37 | 61 | 120 | 3.1 |
| | 13 | 175 | 4 | ORDINARY | PRESENT | 0.35 | 48 | 52 | 120 | 2.6 |
| | 14 | 156 | 4 | ORDINARY | ABSENT | 0.45 | 17 | 60 | 100 | 1.1 |

Notes: A···EXPERIMENTAL EXAMPLES
B···COMPARATIVE EXAMPLES

It will be understood from Table 2 that the following forming conditions are required in order to improve the optical characteristics, thermal resistance and buckling strength of the plastic containers.

In the experimental examples 3 and 4, the forming temperature is within the predetermined range according to the present invention, no plug is used, and the drawing ratio is 0.35 less than 0.43; the containers obtained were excellent in the optical characteristics, thermal resistance and buckling strength.

8

In the experimental example 5, the compressed air temperature is 170°C which is higher than the melting point (165°C) of the polypropylene sheet used, in addition to the requirements of the experimental examples 3 and 4; the heat resistance was improved compared to the experimental examples 3 and 4.

In the experimental example 6, the forming pressure is 1.5 kg/cm which differs from those of the experimental examples 3 and 4, but it is lower than 4 kg/cm$^2$; the characteristics which were substantially the same as those of the experimental examples 3 and 4 were obtained.

In the experimental examples 7 - 9, since the forming temperature is within the predetermined heating range according to the present invention and no plug is used; excellent optical characteristics and thermal resistance were obtained. For the buckling strength, it was low compared to the experimental examples 3 - 6 since the drawing ratio was 0.45 higher than 0.43. However, the buckling strength was high compared to the comparative example 14 because the forming temperature was set in the predetermined temperature range even if the same drawing ratio was employed.

Therefore, in order to obtain plastic containers excellent in any of the optical characteristics, thermal resistance and buckling strength without using the plug, it is necessary to set the forming temperature to a value between the melting point of polypropylene minus 5°C and the melting point of polypropylene plus 5°C. In addition, the forming pressure is preferably 4kg/cm$^2$ or less, the compressed air temperature is preferably the melting point of polypropylene of higher, and the drawing ratio is preferably 0.43 or less.

The resulting containers satisfying such forming conditions maintain their transparency even after forming. The containers will not be deformed even if they are subjected to retorting process, and/or hot filling at a temperature higher than 100°C because their thermal resistance is improved. In addition, by the enhanced buckling strength, the containers will not be damaged even if they are stacked.

While the comparative examples 7 and 8 did not use a plug, their buckling strength decreased because their forming temperatures were 149°C and 156°C, respectively, which were lower than the melting point of polypropylene minus 5°C, namely, 160°C.

While the comparative example 9 did not use a plug, the optical characteristics and buckling strength especially decreased because the forming temperature was 175°C which was higher than the melting point of polypropylene minus 5°C, namely, 170°C.

In the comparative examples 10 and 11, the forming temperatures were 149°C and 154°C, respectively, which were lower than 160°C, so that their thermal resistance and buckling strength decreased.

In the comparative example 12, the forming temperature was within the predetermined temperature range according to the present invention, but transfer of the plug shape occurred, so that no good results on the optical characteristics and buckling strength were obtained.

In the comparative example 13, the forming temperature was 175°C which was higher than 170°C. In addition, transfer of the plug shape occurred. Thus, there arised the problems of optical characteristics and buckling strength.

In the comparative example 14, although no plug was used, there arised problems of optical characteristics, thermal resistance and buckling strength because the forming temperature was 156°C which was lower than 160°C and because the drawing ratio was 0.45 which was higher than 0.43.

Therefore, by the second embodiment, the product transparency is maintained while the thermal resistance and buckling strength are improved. Therefore, the plastic products obtained according to the present invention have excellent thermal resistance, and will not be deformed even if they are subjected to retorting process and/or hot filling at a temperature higher than 100°C.

**Claims**

1.  A method of forming an article out of a thermoplastic resin sheet (11) in which a heated, softened thermoplatic resin sheet (11) is preformed into a half-finished product and then thermally formed into the article using a mold assembly (4) including a die (6) having a cavity and a plug (9), said method comprising the steps of:
    heating a first surface of the sheet facing the plug (9) to a temperature less than or equal to 10°C lower than the melting point of the sheet (11);
    heating a second surface of the sheet facing the die cavity to a temperature between the melting point of the sheet minus 5°C and the melting point of the sheet plus 5°C; and
    thermal forming the heated sheet.

2.  A method according to claim 1, wherein the thermoplastic resin sheet (11) is a polypropylene sheet.

3. A method according to claim 1, wherein the thermoplastic resin sheet (11) is a multilayered sheet having outermost surfaces consisting of polypropylene.

4. A method according to claim 1, wherein the thermoplastic resin sheet (11) is directly heated by a roll and heated indirectly by radiation using a ceramic heater (5) thereafter.

5. A method according to claim 1, wherein the thermoplastic resin sheet (11) is directly heated by a flat plate and heated indirectly by radiation using a ceramic heater (5) thereafter.

6. A method of forming an article out of a thermoplastic resin sheet (11) in which a heated, softened thermoplastic resin sheet (11) is thermally formed into a half-finished product by using a mold assembly (4) including a die (6) without using a plug (9), said method comprising the steps of heating the sheet (11) to a temperature between the melting point of the sheet minus 5°C and the melting point of the sheet plus 5°C and thermal forming the sheet.

7. A method according to claim 6, wherein the thermoplastic resin sheet (11) is a polypropylene sheet.

8. A method according to claim 6, wherein the thermoplastic resin sheet (11) is a multilayered sheet having outermost surfaces consisting of polypropylene.

9. A method according to claim 6, wherein the thermoplastic resin sheet (11) is directly heated by a roll and heated indirectly by radiation using a ceramic heater (5) thereafter.

10. A method according to claim 6, wherein the thermoplastic resin sheet (11) is directly heated by a flat plate and heated indirectly by radiation using a ceramic heater (5) thereafter.

**Patentansprüche**

1. Verfahren zum Bilden eines Gegenstandes aus einer thermoplastischen Harzfolie (11), bei welchem eine erwärmte, erweichte, thermoplastische Harzfolie (11) zu einem Halbfertigprodukt vorgeformt wird und anschließend thermisch zu dem Gegenstand geformt wird unter Verwendung eines Formenzusammenbaus (4), umfassend eine Form (6) mit einem Hohlraum und einen Stopfen (9), das Verfahren umfaßt die folgenden Schritte:
Erwärmen einer ersten Oberfläche der Folie, welche dem Stopfen (9) gegenüberliegt, auf eine Temperatur von weniger als oder gleich 10 °C niedriger als der Schmelzpunkt der Folie (11);
Erwärmen einer zweiten Oberfläche der Folie, welche dem Formenhohlraum gegenüberliegt, auf eine Temperatur zwischen dem Schmelzpunkt der Folie -5 °C und dem Schmelzpunkt der Folie +5 °C; und
thermisches Verformen der erwärmten Folie.

2. Verfahren nach Anspruch 1, wobei diese thermoplastische Harzfolie (11) eine Polypropylenfolie ist.

3. Verfahren nach Anspruch 1, wobei die thermoplastische Harzfolie (11) eine mehrschichtige Folie ist, wobei die Außenflächen aus Polypropylen bestehen.

4. Verfahren nach Anspruch 1, wobei die thermoplastische Harzfolie (11) direkt durch eine Walze erwärmt wird und anschließend indirekt durch Bestrahlung unter Verwendung eines keramischen Heizers (5) erwärmt wird.

5. Verfahren nach Anspruch 1, wobei die thermoplastische Harzfolie (11) direkt durch eine flache Platte erwärmt wird und anschließend indirekt durch Strahlung unter Verwendung eines keramischen Heizers (5) erwärmt wird.

6. Verfahren zum Formen eines Gegenstandes aus einer thermoplastischen Harzfolie (11), wobei eine erwärmte, erweichte, thermoplastische Harzfolie (11) thermisch zu einem Halbfertigprodukt geformt wird unter Verwendung eines Formenzusammenbaus (4), umfassend eine Form (6) ohne die Verwendung eines Stopfens (9), das Verfahren umfaßt die Schritte des Erwärmens der Folie (11) auf eine Temperatur zwischen dem Schmelzpunkt der Folie -5 °C und dem Schmelzpunkt der Folie +5 °C

10

EP 0 376 211 B1

und das thermische Verformen der Folie.

7. Verfahren nach Anspruch 6, wobei die thermoplastische Harzfolie (11) eine Polypropylenfolie ist.

8. Verfahren nach Anspruch 6, wobei die thermoplastische Harzfolie (11) eine mehrschichtige Folie ist, deren Außenflächen aus Polypropylen bestehen.

9. Verfahren nach Anspruch 6, wobei die thermoplastische Harzfolie (11) direkt durch eine Walze und anschließend indirekt durch Strahlung unter Verwendung eines keramischen Heizers (5) erwärmt wird.

10. Verfahren nach Anspruch 6, wobei die thermoplastische Harzfolie (11) direkt durch eine flache Platte und anschließend indirekt durch Strahlung unter Verwendung eines keramischen Heizers erwärmt wird.

**Revendications**

1. Procédé pour former un article dans une feuille de résine thermoplastique (11), dans lequel une feuille de résine thermoplastique ramollie chauffée (11) est préformée en un produit semi-fini et est ensuite formée par chaleur en l'article en utilisant un ensemble de moule (4) comprenant une matrice (6) ayant une cavité et un poinçon (9), ce procédé comprenant les étapes suivantes :
chauffer une première surface de la feuille en vis-à-vis du poinçon (9) à une température égale ou inférieure à la température du point de fusion de la feuille (11) moins 10°C;
chauffer une deuxième surface de la feuille en vis-à-vis de la cavité de la matrice à une température comprise entre le point de fusion de la feuille moins 5°C et le point de fusion de la feuille plus 5°C; et former thermiquement la feuille chauffée.

2. Procédé selon la revendication 1, dans lequel la feuille de résine thermoplastique (11) est une feuille de polypropylène.

3. Procédé selon la revendication 1, dans lequel la feuille de résine thermoplastique (11) est une feuille multicouche dont les surfaces extérieures sont en polypropylène.

4. Procédé selon la revendication 1, dans lequel la feuille de résine thermoplastique (11) est directement chauffée par un rouleau et est chauffée indirectement par rayonnement en utilisant ensuite un élément chauffant céramique (5).

5. Procédé selon la revendication 1, dans lequel la feuille de résine thermoplastique (11) est directement chauffée par une plaque plane et est chauffée indirectement par rayonnement en utilisant ensuite un élément chauffant céramique (5).

6. Procédé pour former un article dans une feuille de résine thermoplastique (11), dans lequel une feuille de résine thermoplastique ramollie chauffée (11) est thermiquement formée en un produit semi-fini en utilisant un ensemble de moule (4) comprenant une matrice (6) sans utiliser de poinçon (9), le procédé comprenant les étapes consistant à chauffer la feuille (11) à une température comprise entre le point de fusion de la feuille moins 5°C et le point de fusion de la feuille plus 5°C et de former thermiquement la feuille.

7. Procédé selon la revendication 6, dans lequel la feuille de résine thermoplastique (11) est une feuille de polypropylène.

8. Procédé selon la revendication 6, dans lequel la feuille de résine thermoplastique (11) est une feuille multicouche dont les surfaces extérieures sont en polypropylène.

9. Procédé selon la revendication 6, dans lequel la feuille de résine thermoplastique (11) est directement chauffée par un rouleau et est chauffée indirectement par rayonnement en utilisant ensuite un élément chauffant céramique (5).

10. Procédé selon la revendication 6, dans lequel la feuille de résine thermoplastique (11) est directement chauffée par une plaque plane et est chauffée indirectement par rayonnement en utilisant ensuite un

11

élément chauffant céramique (5).

# F I G. 1

# F I G. 2